# DEMANDE DE BREVET EUROPEEN

(11) **EP 1 875 822 A1**
(43) Date de publication de la demande: **09.01.2008**
(21) Numéro de dépôt: 06405291.3
(22) Date de dépôt: 07.07.2006
(51) Int. Cl.: A43B 23/16, D06M 23/08, B29B 15/10, C08J 3/28, B32B 27/08, B32B 7/12

(54) **Renfort capable de se thermolier à un support, et procédé pour le fabriquer**

(71) Demandeur: Fibroline France, 69130 Ecully (FR)
(72) Inventeur: Bonin, Vincent, 69650 Saint Germain au Mont d'Or (FR); Marduel, Joric, 69380 Chazay d'Azergues (FR)
(74) Mandataire: Moinas, Michel

(57) **Abrégé**

L'invention concerne un renfort capable de se thermolier à un support sur au moins une des ses faces, caractérisé en ce qu'il comprend au moins deux couches, la première couche (1) étant constituée d'un substrat à réseau fibreux, filamenteux et/ou poreux noyé dans une matière thermoplastifiée et la deuxième couche (2) étant constituée d'une matière thermocollante à une température de 50 à 150 °C, la deuxième couche (2) étant thermocollée à une face de la première couche, ainsi qu'un procédé pour préparer ce renfort.

## Description

La présente invention concerne un nouveau renfort capable de se thermolier à un support, pour une utilisation notamment dans l'industrie de la chaussure, la maroquinerie, la bagagerie, l'ameublement ou l'automobile, ainsi qu'un procédé pour fabriquer ce renfort.

De nombreux produits utilisant conjointement d'une part un premier matériau tel que le cuir (naturel ou artificiel) et des matériaux de revêtement notamment des toiles ou produits textiles par exemple des nontissés, imprégnés (ou non) et/ou enduits (ou non) et, d'autre part, un second matériau qui doit adhérer au premier matériau, notamment à titre de renforcement mécanique. Ce second matériau peut être de type très divers, tissé ou nontissé, imprégné (ou non) ou enduit (ou non), plastique pur ou plastique renforcé par des fibres de tous types, produit en fibres de bois, notamment de type carton et d'autres. Un tel second matériau est utilisé notamment dans l'industrie de la chaussure pour constituer le contrefort, l'embout et la semelle, dans la maroquinerie, dans la bagagerie, dans l'industrie automobile et bien d'autres applications.

Dans la présente demande, on appellera support le premier matériau et renfort le second matériau.

La méthode traditionnelle de lier le renfort au support consiste en un collage par une opération distincte de leur fabrication respective, qui utilise des colles ou adhésifs adaptés aux propriétés physico-chimiques des deux matériaux.

Plus récemment on a développé des matériaux qui par chauffage, deviennent collants en incorporant dans leur composition une matière ayant cette propriété.

On peut citer à titre d'exemple classique les contreforts de chaussure contenant du polycaprolactone qui devient collant à une température d'environ 90°C sous pression atmosphérique. A cette température, ce matériau devient également mou.

Une plaque constituée d'un nontissé adéquat (en polyester par exemple) imprégné de polycaprolactone peut être découpée à la forme du contrefort désiré.

Le contrefort ainsi découpé peut être chauffé, donc ramolli, formé en V, appliqué dans le talon de la chaussure et collé au cuir de celui-ci par l'adhérence à chaud du polycaprolactone au cuir.

Cette méthode évite l'emploi ancien de colle avec ses inconvénients (manque de souplesse, décollement au vieillissement), réduit le nombre d'opérations et donc le coût du produit final.

Le résultat recherché de l'adhésion du renfort au support peut être obtenu par l'usage de différents matériaux et de différentes méthodes de fabrication du renfort.

On peut citer à titre d'exemple de matériaux ayant des propriétés thermocollantes intéressantes pour la fabrication des renforts, le polycaprolactone, le polyéthylènevinylacétate (EVA), le copolymère styrène-butadiène (Styrene Butadiene Rubber SBR), le copolymère acrylonitrile-butadiène (Acrylonitrile Butadiene elastomer NBR).

On peut citer comme méthodes de fabrication
- l'imprégnation d'un non tissé par voie humide (passage du non tissé dans une suspension aqueuse de poudre thermoplastique suivi d'un séchage, d'un chauffage et d'un calandrage),
- l'imprégnation d'un non tissé par un thermoplastique dissout dans un solvant (suivi de l'élimination du solvant, d'un chauffage et d'un calandrage),
- l'enduction d'un non tissé par un thermoplastique à l'état pâteux et calandrage à chaud (procédé « hot melt »),
- le saupoudrage d'un nontissé par un thermoplastique en poudre, puis chauffage et calandrage à chaud.

Les thermoplastiques ayant des propriétés de collage à chaud à une température de 50 à 150 °C tel que le polycaprolactone, étant relativement chers (plus que d'autres thermoplastiques tels que le PVC ou le polyéthylène), des recherches ont été effectuées pour mettre au point des procédés réduisant la quantité de thermoplastiques thermocollants à température modérée en mélangeant ceux-ci à des thermoplastiques moins chers. Un tel mélange est acceptable pour le fabricant de renfort tant que la force d'adhérence au cuir après thermocollage reste suffisante.

WO 00/54617 décrit un procédé de fabrication de contrefort pour chaussures dans lequel des fils de polycaprolactone sont tissés avec d'autres fils thermoplastiques, ce qui permet de réduire la quantité de polycaprolactone à utiliser pour obtenir des propriétés de collage et de rigidité équivalentes à celles de l'art antérieur.

WO 00/53416 divulgue un procédé de fabrication de contrefort pour chaussures qui utilise des thermoplastiques pour partie recyclés, dans le but de minimiser le prix du contrefort ainsi produit, la quantité de polycaprolactone à utiliser dans le cas d'un produit plus dense étant en proportion plus faible.

JP-2107203 décrit l'application d'une couche de polycaprolactone sur un substrat textile imprégné d'un polymère greffé de latex de caoutchouc naturel vulcanisé.

Dans un autre régistre relatif aux procédés d'imprégnation, le brevet EP-B1-1'028'836 décrit un procédé d'imprégnation à sec de poudres dans un réseau fibreux ou filamenteux à l'aide d'un champ électrique alternatif. Ce procédé consiste à placer la poudre d'une part, et le réseau fibreux ou filamenteux d'autre part, entre deux plaques d'électrodes en vis-à-vis isolées électriquement l'une de l'autre et reliées aux pôles d'un générateur à tension alternative, et à soumettre la poudre et le réseau fibreux ou filamenteux à un champ électrique dont la tension alternative est d'au moins 5 kV pendant une durée d'au moins 2 secondes.

La demande de brevet EP-A-1'526'214 décrit une variante du procédé de EP-B1-1'028'836 qui applique un champ électrique alternatif de 0,10 à 20 kV/mm à l'aide d'un système d'électrodes comportant au moins un tube électrodique.

L'objectif de l'invention est de proposer un renfort capable de se thermolier à un support qui ne présente pas les inconvénients des procédés connus, en particulier qui permette d'obtenir une force d'adhérence à ce support satisfaisante en minimisant le thermoplastique thermocollant à une température de 50 à 150 °C, ainsi qu'un procédé pour fabriquer ce renfort.

Cet objectif est atteint par l'invention telle que définie par les revendications.

L'invention propose en effet un nouveau renfort capable de se thermocoller à un support avec une force d'adhérence supérieure ou comparable à celle des renforts connus avec l'utilisation d'une quantité minimale de thermoplastique thermocollant à une température de 50 à 150 °C. Ce renfort peut avantageusement être obtenu par un procédé économique et écologique, peu consommateur en énergie et non-utilisateur d'eau ou de solvants.

L'invention concerne un renfort capable de se thermolier à un support sur au moins une des ses faces, caractérisé en ce qu'il comprend au moins deux couches, la première couche (1) étant constituée d'un substrat à réseau fibreux, filamenteux et/ou poreux noyé dans une matière thermoplastifiée et la deuxième couche (2) étant constituée d'une matière thermocollante à une température de 50 à 150 °C, la deuxième couche (2) étant thermocollée à une face de la première couche.

Le support auquel le renfort est capable de se lier est en général un cuir naturel ou artificiel utilisé dans l'industrie par exemple de la chaussure, la maroquinerie, la bagagerie, l'ameublement ou l'automobile.

Le substrat à réseau fibreux, filamenteux et/ou poreux peut être notamment un tissé, un tricot, un nontissé, une mousse ou un assemblage de ces supports, d'épaisseur en général 0,5 à 100 mm, souvent de 1 à 40 mm, en particulier de 2 à 20 mm, à base de matières textiles naturelles ou artificielles telles que par exemple le coton, la laine, une autre fibre issue de l'agriculture, un polyester tel que notamment un polytéréphtalate, un polyamide, une polyoléfine telle que notamment un polypropylène, un polyéthylène ou un copolymère éthylène-propylène, ou à base d'un mélange de telles matières textiles naturelles ou artificielles.

La matière thermoplastifiée est constituée, en poids, de 25 à 100 % de thermoplastique et de 0 à 75 % de particules de charge. Celles-ci sont formées par exemple d'une matière minérale telles que le talc, le carbonate de calcium, le verre, d'un autre thermoplastique à haut point de fusion, d'un thermodurcissable pouvant ramollir partiellement, d'une matière organique cellulosique, d'une matière fonctionnelle par exemple antistatique, antibactérienne ou antiodeur, ou d'une autre substance de bas coût, par exemple recyclée (comme décrit dans WO97/38060).

Le thermoplastique de la matière thermoplastifiée est en général bon marché, choisi pour conférer au renfort des propriétés mécaniques, et en particulier une rigidité, satisfaisantes. Sa température de fusion est en général comprise entre 50 et 150 °C, de préférence entre 50 et 100 °C. Il peut être par exemple un PVC, un EVA à faible taux de vinylacétate, un polyéthylène basse densité PELD, un polyéthylène haute densité PEHD, un polycaprolactone PCL ou un autre thermoplastique du même type.

La deuxième couche (2) est une couche mince, d'épaisseur suffisante pour se thermocoller à un support avec une force d'adhérence appropriée. Son épaisseur est en général comprise entre 5 et 500 µm, de préférence entre 10 et 50 µm, en particulier entre 15 et 25 µm.

La matière thermocollante est formée, en poids, de 25 à 100 % d'une substance ayant des propriétés thermocollantes à une température ne dégradant pas le support auquel le renfort est capable de se lier, c'est à dire en général à une température de 50 à 150 °C, en particulier de 50 à 100 °C, et de 0 à 75 % d'une matière, en général peu coûteuse, par exemple une matière minérale telle que le talc, le carbonate de calcium, le verre, un autre thermoplastique à haut point de fusion, un thermodurcissable pouvant ramollir partiellement, une matière organique cellulosique, une matière fonctionnelle par exemple antistatique, antibactérienne ou antiodeur, ou une autre substance de bas coût, par exemple recyclée (comme décrit dans WO97/38060).

La substance ayant des propriétés thermocollantes est en général un polymère thermocollant choisi parmi le polycaprolactone, un copolyamide, un copolyester, un polyvinylacétate (PVAc), un polyuréthanne (PU), un polyéthylènevinyl acétate (EVA) à taux de vinylacétate élevé.

Le renfort de l'invention peut comporter au moins une troisième couche pelable (3) attachée à la deuxième couche thermocollante.

Cette couche pelable (3) est destinée à être pelée du renfort avant application du renfort sur le support. Elle a pour fonction d'une part d'assurer une protection de la matière thermocollante, évitant son thermocollage en cas de chauffage intempestif du renfort (par exemple par exposition au soleil), d'autre part de permettre de fabriquer le renfort avec une couche (2) mince, donc utilisant peu de matière thermocollante à une température de 50 à 150 °C, par déroulage d'un film thermocollant, formé de la couche thermocollante attachée à la couche pelable, à propriétés mécaniques satisfaisantes, comme décrit ci-après.

La couche pelable (3) peut être formée d'une à plusieurs couches d'épaisseur 10 à 300 µm, formées de papier par exemple siliconé et/ou d'un polymère thermoplastique en général bon marché ayant une température de fusion plus élevée que le thermoplastique de la matière thermoplastifiante de la première couche. Ce thermoplastique peut être par exemple du PVC, du PEHD, du PEBD, du PP ou une autre matière telle que du polyamide ou du polyester ou une autre matière thermoplastique.

Le renfort défini ci-dessus peut également comprendre au moins une autre couche (2') constituée d'une matière thermocollante à température modérée, cette couche (2') étant thermocollée à la face opposée de la première couche (1) par rapport à la deuxième couche (2). La matière thermocollante à une température de 50 à 150 °C de la couche (2') est définie comme exposé ci-dessus pour la couche (2).

Le renfort de l'invention comporte alors de préférence au moins une couche pelable (3') attachée à l'autre couche (2'). Cette couche pelable est définie comme exposé ci-dessus pour la couche (3).

Le renfort de l'invention peut être fabriqué par un procédé comprenant l'imprégnation de la matière thermoplastifiante dans le substrat à réseau fibreux, filamenteux et/ou poreux, de façon à obtenir la première couche (1), et le thermocollage à une face de cette première couche (1) d'une deuxième couche (2) de matière thermocollante à une température de 50 à 150 °C. L'imprégnation de la matière thermoplastifiante dans le substrat peut se faire par un procédé par voie humide ou utilisant un solvant organique, par un procédé « hot melt », ou un procédé à sec tel que décrit dans le brevet EP-B1-1'028'836.

De préférence le renfort de l'invention est fabriqué par un procédé qui comprend successivement
(a) le déroulement d'un film thermocollant,
(b) le dépôt d'un substrat à réseau fibreux, filamenteux et/ou poreux sur le film thermocollant,
(c) le saupoudrage d'une poudre de thermoplastification sur le substrat à réseau fibreux, filamenteux et/ou poreux,
(d) le positionnement de l'ensemble obtenu à l'issue de l'étape (c) entre deux électrodes isolées électriquement l'une de l'autre et reliées aux pôles d'un générateur à tension alternative, et l'application d'un champ électrique alternatif de 0,10 à 20 kV/mm de façon à imprégner le substrat de cette poudre de thermoplastification,
(e) le chauffage de l'ensemble imprégné à une température suffisante pour fondre le thermoplastique de la poudre de thermoplastification et le film thermocollant, et
(f) le compactage de l'ensemble chauffé pour chasser l'air.

Le film thermocollant est un film monocouche ou multicouche de 2 à 5 couches. En général le film thermocollant est monocouche ou bi-couche. Au moins une des couches située vers l'extérieur du film est constituée d'une matière thermocollante à une température de 50 à 150 °C qui rend le film thermocollant sur l'une de ces faces. Cette couche (correspondant à la deuxième couche (2) de matière thermocollante à une température de 50 à 150 °C du renfort défini ci-dessus) est d'épaisseur en général comprise entre 5 et 500 µm, de préférence entre 10 et 50 µm, en particulier entre 15 et 25 µm. La ou les autres couches, d'épaisseur 10 à 300 µm, sont formées de papier par exemple siliconé ou d'un polymère thermoplastique, en général bon marché, ayant une température de fusion suffisamment élevée pour ne pas fondre pendant l'étape (e). Ce thermoplastique peut être par exemple un PVC, un EVA à faible taux de vinylacétate, un polyéthylène basse densité PELD, un polyéthylène haute densité PEHD, un autre thermoplastique du même type. La ou les couches non formées d'une matière thermocollante à une température de 50 à 150 °C, qui constituent la doublure (le « liner ») du film thermocollant, sont destinées à être pelées du renfort obtenu avant application du renfort sur le support. Elles ne doivent pas fondre lors de l'étape (e) car elles perdraient après compactage leur caractère pelable. Ces couches de doublure permettent d'une part d'utiliser une faible épaisseur de la couche de matière thermocollante à une température de 50 à 150 °C (donc d'économiser celle-ci) en conservant des propriétés mécaniques satisfaisantes pour le déroulement du film thermocollant lors de l'étape (a), d'autre part d'assurer une protection de la couche thermocollante, comme exposé ci-dessus.

La ou les couches thermocollantes peuvent être des films continus extrudés, des voiles de films ou filaments, ou des grilles extrudées ou réalisées à partir de filaments.

Le substrat à réseau fibreux, filamenteux et/ou poreux est celui défini ci-dessus pour la première couche (1) du renfort de l'invention.

La poudre de thermoplastification à température de fusion relativement basse est une poudre de granulométrie en général comprise dans une plage incluse dans l'intervalle de 0,1 à 500 µm, plage choisie en fonction de la densité et la porosité du substrat de façon à permettre son imprégnation dans l'épaisseur de celui-ci dans les conditions de l'étape (d).

La poudre de thermoplastification à température de fusion relativement basse peut aussi avoir une granulométrie de 500 à 2000 µm, de préférence de 500 à 1000 µm, dans le cas où le substrat est un non tissé constitué de fibres non liées entre elles ou très faiblement liées entre elles permettant faire bouger ces éléments fibreux pendant le traitement.

La poudre de thermoplastification peut être constituée, en poids, de 25 à 100 % de thermoplastique et de 0 à 75 % de particules de charge formées d'une matière, en général peu coûteuse, par exemple une matière minérale telles que le talc, le carbonate de calcium, le verre, un autre thermoplastique à haut point de fusion, un thermodurcissable pouvant ramollir partiellement, une matière organique cellulosique, une matière fonctionnelle par exemple antistatique, antibactérienne ou antiodeur, ou une autre substance de bas coût, par exemple recyclée (comme décrit dans WO97/38060). Dans un tel mélange, la granulométrie des particules de thermoplastique et des particules de charge peut être identique ou différente, éventuellement modulée de façon à permettre l'imprégnation homogène de ces particules de différente nature, donc de densité et propriétés physicochimiques différentes, dans le substrat à réseau fibreux, filamenteux et/ou poreux au cours de l'étape (d).

Le thermoplastique de la poudre de thermoplastification est celui défini ci-dessus pour la matière plastifiée du renfort de l'invention.

L'étape (a) consiste à dérouler un film thermocollant.

L'étape (b) consiste à déposer sur le film thermocollant un substrat à réseau fibreux, filamenteux et/ou poreux.

L'étape (c) consiste à saupoudrer une poudre de thermoplastification sur le substrat à réseau fibreux, filamenteux et/ou poreux.

L'étape (c) peut être suivie d'une étape (c') consistant à dérouler un deuxième film thermocollant tel que défini ci-dessus sur le substrat à réseau fibreux, filamenteux et/ou poreux saupoudré obtenu à l'étape (c).

Alternativement l'étape (c) peut être suivie d'une étape (c") consistant à dérouler un film détachable sur le substrat à réseau fibreux, filamenteux et/ou poreux saupoudré obtenu à l'étape (c).

Ce film détachable peut être formé d'une à plusieurs couches d'épaisseur 10 à 300 µm, formées de papier par exemple siliconé et/ou d'un polymère thermoplastique en général bon marché ayant une température de fusion plus élevée que le thermoplastique de la matière thermoplastifiante de la première couche. Ce thermoplastique peut être par exemple du PVC, du PEHD, du PEBD, du PP ou une autre matière telle que du polyamide ou du polyester ou une autre matière thermoplastique.

L'avantage de dérouler à l'issue de l'étape (c) un deuxième film thermocollant (étape (c')) ou un film détachable (étape (c'')) est de permettre le confinement de la poudre lors de l'étape (d) et donc d'éviter la contamination par celle-ci des bandes transporteuses.

L'étape (d) consiste à positionner l'ensemble obtenu entre deux électrodes isolées électriquement l'une de l'autre et reliées aux pôles d'un générateur à tension alternative, et à lui appliquer un champ électrique alternatif de 0,10 à 20 kV/mm pendant un temps suffisant pour imprégner le substrat de la poudre de thermoplastification. Le système d'électrodes peut être par exemple formé de deux plaques parallèles en vis-à-vis, d'une plaque et d'une série de tubes cathodiques en vis-à-vis, ou de deux séries de tubes cathodiques parallèles, soit en vis-à-vis, soit décalés (cf. EP-A-1'526'214).

L'étape (e) consiste à chauffer l'ensemble obtenu à l'issue de l'étape (d) à une température suffisante pour fondre le thermoplastique de la poudre de thermoplastification, et le film thermocollant, par exemple en le chauffant par convection, par conduction ou par rayonnement infrarouge.

L'étape (f) consiste à compacter l'ensemble chauffé pour chasser l'air, par exemple par calandrage.

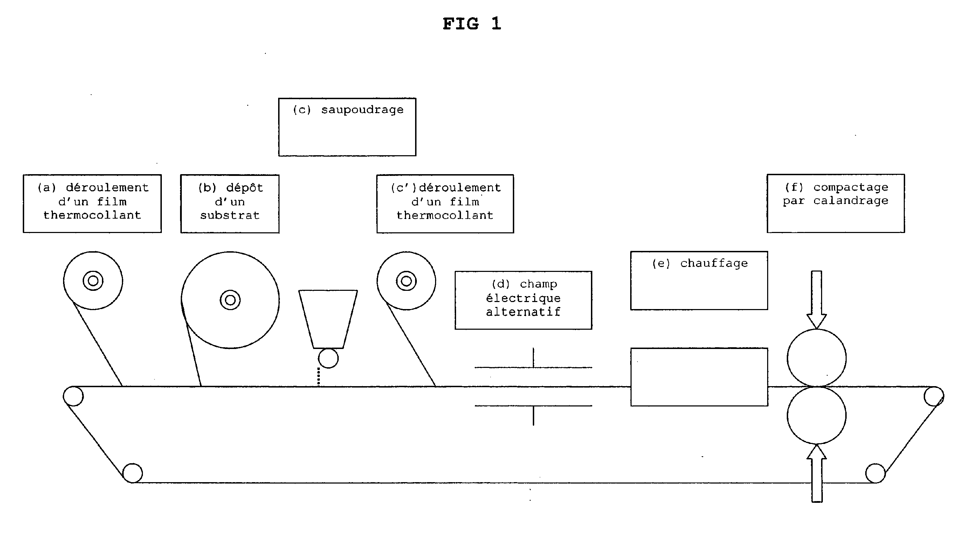

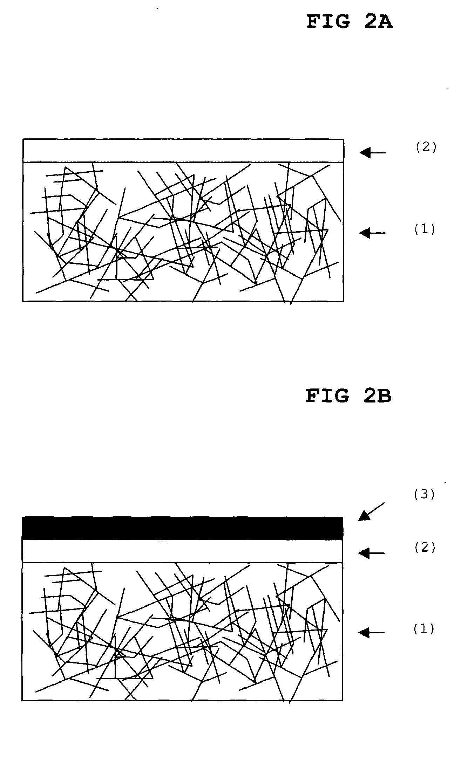

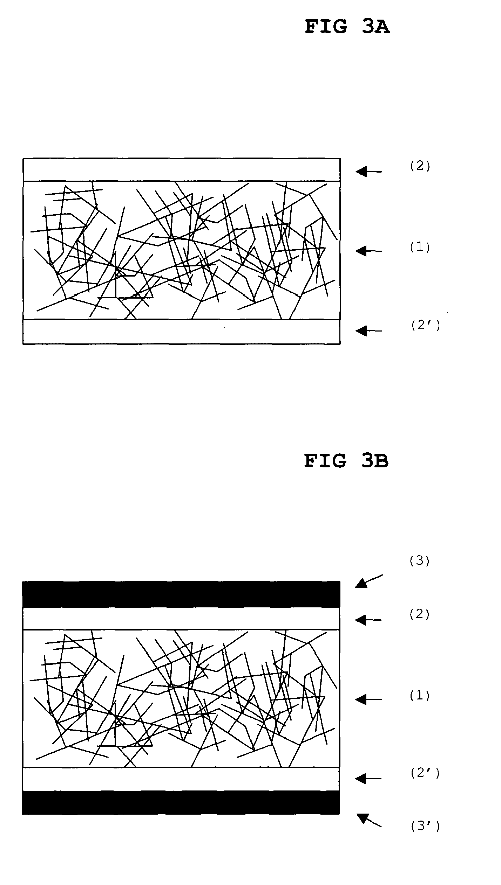

L'invention est illustrée sans caractère limitatif à l'aide des figures 1, 2A, 2B, 3A et 3B.

La Figure 1 représente de façon schématique les différentes étapes d'une forme de réalisation du procédé de l'invention et les éléments qu'il met en oeuvre.

On a représenté sur cette figure : (a) le déroulement sur un tapis avançant d'un film thermocollant enroulé autour d'un cylindre, (b) le dépôt sur ce film thermocollant d'un substrat enroulé autour d'un cylindre, (c) le saupoudrage à l'aide d'un saupoudreuse d'une poudre de thermoplastification sur ce substrat, (c') le déroulement sur l'ensemble saupoudré obtenu d'un film thermocollant enroulé sur un cylindre, (d) l'application d'un champ électrique alternatif de façon à imprégner le substrat de la poudre de thermoplastification, (e) le chauffage de l'ensemble imprégné par passage à travers un four et (f) le compactage par calandrage entre deux cylindres.

Les Figures 2A et 2B représentent de façon schématique un renfort selon les revendications respectives 1 et 2.

Les Figures 3A et 3B représentent de façon schématique un renfort selon les revendications respectives 3 et 4.

Les exemples ci-après illustrent l'invention sans caractère limitatif.

### Exemple 1: Fabrication selon l'invention de contre-forts de chaussure avec un substrat nontissé de polyester, une poudre thermoplastique d'EVA et un film thermocollant de copolyamide.

Le film thermocollant est le Co-extrudé PE/CoPA disponible commercialement sous la référence 199 auprès de Legatech, France. C'est un film bi-couche constitué d'une couche de garniture de 40 µm d'épaisseur de polyéthylène haute densité de couleur bleue de température de fusion 123 °C et d'une couche thermocollante de 24 µm d'épaisseur de copolyamide de température de thermocollage d'environ 90 °C et de température de fusion d'environ 100 °C.

Le substrat est un nontissé de polyester aiguilleté thermolié de 6 mm d'épaisseur et de 400 g/m².

La poudre thermoplastifiante est la poudre EVA T1 à faible taux de vinylacétate de granulométrie 0-125µm (Dakota Coatings - Belgique). Cette poudre est saupoudrée à 600 g/m².

Après déroulement du film thermocollant, dépôt sur celui-ci du substrat et saupoudrage de la poudre thermoplastifiante, on procède à l'imprégnation en continu selon l'étape (d) du procédé de l'invention avec la configuration d'électrodes suivante : tubes électrodiques creux de quartz métallisés intérieurement en vis-à-vis avec une distance inter-diélectrique entre deux tubes en vis-à-vis (zone d'imprégnation) de 15 mm et distance entre deux tubes adjacents de 10 mm. Paramètres du procédé: longueur de traitement de 1 m avec une vitesse de défilement de 3m/min, soit un temps de traitement de 20 secondes, voltage alternatif à 50 kV, soit un champ de 2,5 kV/mm.

On procède ensuite à un chauffage à 110°C dans une étuve, puis on calandre à froid de sorte à obtenir un produit fini d'épaisseur 1 mm.

On évalue alors la propriétés collantes du produit comme suit : on colle du cuir sur le produit sous presse chaude sous un pression de 20 bars à 60°C pendant 30 secondes, puis les échantillons sont découpés à 50 mm de large pour réaliser des essais de traction. On mesure la force d'adhérence, force nécessaire au décollement sur 50 mm de large.

On obtient pour le produit obtenu une force d'adhérence de 92,5 N très supérieure à celle obtenue pour les produits commerciaux utilisés pour faire des contreforts de chaussures thermocollables au cuir.

Par exemple le produit vendu sous la dénomination ARCO par la Société Forestali, France, constitué de tissé coton gratté, imprégné de latex spécial avec enduction de vinyl thermoadhésif (polymère proche du polycaprolactone), a une force d'adhérence de 29 N.

### Exemple 2: Fabrication selon l'invention de contre-forts de chaussure avec un substrat tissé de coton gratté, une poudre thermoplastique d'EVA et un film thermocollant de copolyamide.

Le film thermocollant et la poudre thermoplastifiante sont les mêmes qu'à l'Exemple 1.

Le substrat est un tissé de coton gratté de 500 g/m² d'épaisseur 5mm.

On effectue le procédé de l'invention comme décrit dans l'Exemple 1.

On évalue les propriétés collantes du produit obtenu comme décrit dans l'Exemple 1.

On obtient pour ce produit une force d'adhérence de 58 N, très supérieure à celle obtenue pour les produits commerciaux utilisés pour faire des contreforts de chaussures thermocollables au cuir.

### Exemple 3: Fabrication selon l'invention de contre-forts de bagage avec un substrat nontissé de polyester, une poudre thermoplastique d'EVA et un film thermocollant de polycaprolactone chargé de 40 % de talc.

Le substrat et la poudre thermoplastifiante sont les mêmes que dans l'Exemple 1.

Le film thermocollant est constitué d'une couche de d'épaisseur 70 µm de polycaprolactone chargé à 40 % de talc, disponible commercialement sous le nom « film polycaprolactone référence 199 » auprès de Legatech, France. On effectue le procédé de l'invention comme décrit dans l'Exemple 1.

On évalue les propriétés collantes du produit obtenu comme décrit dans l'Exemple 1.

On obtient pour ce produit une force d'adhérence de 20 N comparable à celle obtenue pour les produits commerciaux utilisés pour faire des contreforts de bagages thermocollables au cuir.

## Revendications

1. Renfort capable de se thermolier à un support sur au moins une des ses faces, **caractérisé en ce qu'**il comprend au moins deux couches, la première couche (1) étant constituée d'un substrat à réseau fibreux, filamenteux et/ou poreux noyé dans une matière thermoplastifiée et la deuxième couche (2) étant constituée d'une matière thermocollante à une température de 50 à 150 °C, la deuxième couche (2) étant thermocollée à une face de la première couche.

2. Renfort selon la revendication 1, **caractérisé en ce qu'**il comprend au moins une troisième couche pelable (3) attachée à la deuxième couche thermocollante.

3. Renfort selon la revendication 1 ou 2, **caractérisé en ce qu'**il comprend au moins une autre couche (2') constituée d'une matière thermocollante à une température de 50 à 150 °C, cette couche (2') étant thermocollée à la face opposée de la première couche (1) par rapport à la deuxième couche (2).

4. Renfort selon la revendication 3, **caractérisé en ce qu'**il comprend au moins une couche pelable (3') attachée à l'autre couche (2')

5. Renfort selon l'une des revendications précédentes **caractérisé en ce que** la matière thermoplastifiée est constituée, en poids, de 25 à 100 % d'un thermoplastique et de 0 à 75 % de particules de charge.

6. Renfort selon l'une des revendications précédentes **caractérisé en ce que** le substrat à réseau fibreux, filamenteux et ou poreux est un tissé, un tricot, un nontissé, une mousse ou un assemblage de ces supports, à base de matières textiles naturelles et/ou artificielles .

7. Renfort selon l'une des revendications précédentes **caractérisé en ce que** la matière thermocollante à une température de 50 à 150 °C est constituée, en poids, de 25 à 100% d'un polymère thermocollant, et de 0 à 75% d'une charge inerte.

8. Renfort selon la revendication 7 **caractérisé en ce que** le polymère thermocollant est choisi parmi le polycaprolactone, un copolyamide, un copolyester, un polyvinylacétate (PVAc), un polyuréthanne (PU), un éthylvinyl acétate (EVA) à taux de vinylacétate élevé .

9. Renfort selon l'une des revendications précédentes **caractérisé en ce que** l'épaisseur de la couche thermocollante (2, 2') est comprise entre 5 et 500 µm, en particulier entre 10 et 50 µm.

10. Renfort selon l'une des revendications précédentes **caractérisé en ce que** la couche pelable (3, 3') est formée d'une à plusieurs couches d'épaisseur 5 à 300 µm, formées de papier et/ou d'un polymère thermoplastique ayant une température de fusion plus élevée que le thermoplastique de la matière thermoplastifiante de la première couche (1).

11. Procédé pour préparer un renfort selon l'une des revendications précédentes **caractérisé en ce qu'**il comprend l'imprégnation de la matière thermoplastifiante dans le substrat à réseau fibreux, filamenteux et/ou poreux, de façon à obtenir la première couche (1), et le thermocollage à une face de cette première couche (1) d'une deuxième couche (2) de matière thermocollante à une température de 50 à 150 °C.

12. Procédé selon la revendication 11 **caractérisé en ce qu'**il comprend les étapes suivantes:
(a) le déroulement d'un film thermocollant,
(b) le dépôt d'un substrat à réseau fibreux, filamenteux et/ou poreux sur le film thermocollant,
(c) le saupoudrage d'une poudre de thermoplastification sur le substrat à réseau fibreux, filamenteux et/ou poreux,
(d) le positionnement de l'ensemble obtenu à l'issue Pde l'étape (c) entre deux électrodes isolées électriquement l'une de l'autre et reliées aux pôles d'un générateur à tension alternative, et l'application d'un champ électrique alternatif de 0,10 à 20 kV/mm de façon à imprégner le substrat de cette poudre de thermoplastification,
(e) le chauffage de l'ensemble imprégné à une température suffisante pour fondre le thermoplastique de la poudre de thermoplastification et le film thermocollant, et
(f) le compactage de l'ensemble chauffé pour chasser l'air.

13. Procédé selon la revendication 12 **caractérisé en ce que** l'étape (c) est suivie d'une étape (c') consistant à dérouler un deuxième film thermocollant sur le substrat à réseau fibreux, filamenteux et/ou poreux saupoudré obtenu à l'étape (c).

14. Procédé selon la revendication 12 **caractérisé en ce que** l'étape (c) est suivie d'une étape (c") consistant à dérouler un film détachable sur le substrat à réseau fibreux, filamenteux et/ou poreux saupoudré obtenu à l'étape (c).
